(19) **Europäisches Patentamt / European Patent Office / Office européen des brevets**

(11) **EP 4 564 043 A1**

(12) # EUROPEAN PATENT APPLICATION

(43) Date of publication:
**04.06.2025 Bulletin 2025/23**

(21) Application number: **24216217.0**

(22) Date of filing: **28.11.2024**

(51) International Patent Classification (IPC):
**G01S 7/02** *(2006.01)*     **G01S 7/288** *(2006.01)*
**G01S 7/35** *(2006.01)*     **G01S 13/02** *(2006.01)*
**G01S 13/44** *(2006.01)*     **H01Q 21/22** *(2006.01)*

(52) Cooperative Patent Classification (CPC):
**G01S 7/358; G01S 7/023; G01S 7/028;
G01S 7/2886; G01S 13/02; G01S 13/44;
H01Q 21/22;** G01S 2013/0245

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.11.2023 US 202318524517**

(71) Applicant: **NXP B.V.**
**5656 AG Eindhoven (NL)**

(72) Inventors:
• **JANSSEN, Erwin Johannes Gerardus**
  **5656AG Eindhoven (NL)**
• **CIACCI, Massimo**
  **5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **HYBRID QUADRATURE RECEIVE ARRAY**

(57) A method for receiving a radio frequency signal using a phased array receiver includes generating a first digital received signal based on a first signal received from a first antenna and a local clock signal. The method includes generating a second digital received signal based on a second signal received from a second antenna and the local clock signal. The method includes combining the first digital received signal and the second digital received signal to generate a first complex received signal. The second antenna is spaced by a predetermined distance from the first antenna.

FIG. 4

## Description

## BACKGROUND

### Field of the Invention

This disclosure relates to receivers for radar applications.

### Description of the Related Art

In general, a phased array receiver includes multiple receiver circuits coupled to multiple antennas. Each receiver circuit provides information about the angle of arrival of signals with respect to the antenna elements. Typically, each individual receiver circuit is coupled to an antenna in a phased array of identical antennas and is implemented using a real receiver topology or a full IQ receiver topology. The real receiver topology is relatively low-cost but is associated with reduced performance as compared to the full IQ receiver topology due to the inability of a real receiver to distinguish between positive frequencies and negative frequencies. The full IQ receiver allows distinction between positive frequencies and negative frequencies, thus enabling more functionality and higher performance than a real receiver topology. However, the full IQ receiver topology is more costly than the real receiver topology because it includes additional circuitry (e.g., an additional mixer, additional filters, an additional analog-to-digital converter, a phase shifting circuit, etc.). Thus, a full IQ receiver consumes more area and more current than a real receiver. Accordingly, improved techniques for receiving wireless signals using a phased array receiver are desired.

### BRIEF DESCRIPTION OF THE DRAWINGS

The present invention is illustrated by way of example and is not limited by the accompanying figures, in which like references indicate similar elements. Elements in the figures are illustrated for simplicity and clarity and have not necessarily been drawn to scale.

**Figure 1** illustrates a functional block diagram of a conventional IQ phased array receiver having two antennas.

**Figure 2** illustrates a functional block diagram of a conventional real receiver having two antennas.

**Figure 3** illustrates a functional block diagram of a hybrid IQ phased array receiver consistent with at least one embodiment of the invention.

**Figure 4** illustrates a functional block diagram of an alternative embodiment of a hybrid IQ phased array receiver consistent with at least one embodiment of the invention.

**Figure 5** illustrates waveforms of amplitude as a function of direction of arrival for positive and negative frequencies of a signal received using the receiver of Fig. 1.

**Figure 6** illustrates waveforms of amplitude as a function of direction of arrival for positive and negative frequencies of a signal received using a hybrid IQ phased array receiver consistent with at least one embodiment of the invention.

**Figure 7** illustrates waveforms of Signal-to-Interference-Ratio (SIR) as a function of frequency for a conventional IQ phased array receiver, a real receiver, and a hybrid IQ phased array receiver.

**Figure 8** illustrates waveforms of Signal-to-Interference-plus Noise-Ratio (SINR) as a function of direction of arrival at an antenna array of a target signal in the presence of an interferer fixed at zero degrees for a conventional IQ phased array receiver, a real phased array receiver, a hybrid IQ phased array receiver, and a full IQ single antenna receiver.

**Figure 9** illustrates waveforms of Signal-to-Interference-plus Noise-Ratio (SINR) as a function of direction of arrival at an antenna array of an interferer in the presence of a target signal fixed at zero degrees for a conventional IQ phased array receiver, a real phased array receiver, a hybrid IQ phased array receiver, and a full IQ single antenna receiver.

The use of the same reference symbols in different drawings indicates similar or identical items.

### DETAILED DESCRIPTION

A hybrid phased array receiver includes $N$ real receiver channels coupled to $N$ corresponding antennas. Each of the $N$ real receiver channels of the hybrid phased array receiver has a phase offset from a corresponding other real receiver channel of the hybrid phased array receiver. By appropriate combination of received signals, positive frequencies can be distinguished from negative frequencies, providing similar advantages as a phased array of $N$ full IQ receiver channels, but at a cost approximately the same as the cost of $N$ real receiver channels, which is less than the cost of $N$ full IQ receiver channels. A hybrid phased array receiver has a higher signal-to-interferer ratio against wideband interference as compared to a real phased array receiver at a lower cost than a full IQ phased array receiver that provides a complex received signal per full IQ receiver channel.

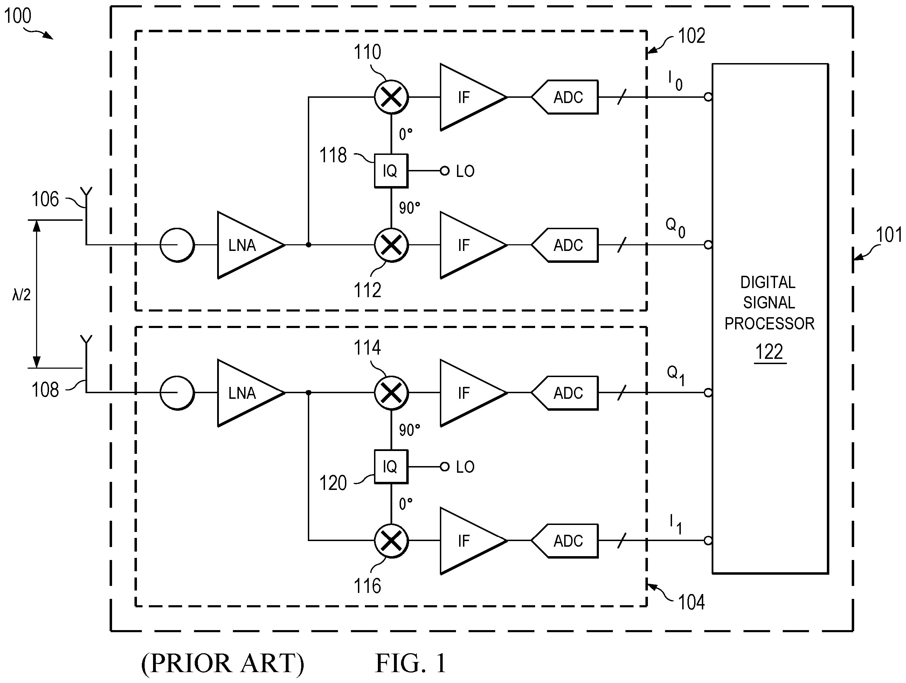

Referring to Fig. 1, full IQ phased array receiver 100 includes two full IQ receiver channels (i.e., $N= 2$) in a beamforming receiver. Antenna 106 and antenna 108 are coupled to full IQ receiver channel 102 and full IQ receiver channel 104, respectively. In general, beamforming antennas are spaced by a distance that provides useful constructive and destructive interference patterns (e.g., $\lambda / 2$) that reduces or minimizes mutual coupling of the antennas. Larger spacings can result in higher grating lobes (i.e., unwanted beams). Antenna 106 is spaced by $\lambda / 2$ from antenna 108 (where $\lambda$ is the wavelength of the radio frequency carrier signal) consistent with conventional beamforming techniques that estimate a direction of arrival at an antenna array of one or more signals received by full IQ phased array receiver 100. In an embodiment of full IQ phased array receiver 100, full IQ receiver channel 102 and full IQ receiver channel 104 are included in integrated circuit 101. Each full IQ receiver channel $n$ (where $0 \leq n \leq N\text{-}1$) includes a low noise amplifier that is coupled to a corresponding antenna, an IQ clock generator configured to generate quadrature clock signals, and quadrature receiver paths that provide in-phase received digital signal $I_n$ and quadrature received digital signal $Q_n$ to digital signal processor 122. For example, full IQ receiver channel 102 includes quadrature clock generator 118, which generates two clock signals that are 90 degrees out of phase with each other based on local oscillator signal LO. Quadrature clock generator 118 provides one of those clock signals (e.g., 0° clock signal) to mixer 110 for use in reducing the received signal frequency to an intermediate frequency or baseband frequency to generate in-phase received digital signal $I_0$. Quadrature clock generator 118 provides the other clock signal (e.g., 90° clock signal) to mixer 112 for use in reducing the received signal frequency to an intermediate frequency or a baseband frequency to generate quadrature received digital signal $Q_0$. Similarly, full IQ receiver channel 104 includes quadrature clock generator 120, which generates two clock signals that are 90 degrees out of phase with each other based on local oscillator signal LO. Quadrature clock generator 120 provides one of those clock signals (e.g., 90° clock signal) to mixer 114 for use in generating quadrature received digital signal $Q_1$ and the other clock signal (e.g., 0° clock signal) to mixer 116 for use in generating in-phase received digital signal $I_1$.

Full IQ receiver channel 102 provides in-phase received digital signal $I_0$ and quadrature received digital signal $Q_0$ to digital signal processor 122 and full IQ receiver channel 104 provides in-phase received digital signal $I_1$ and quadrature received digital signal $Q_1$ to digital signal processor 122. Digital signal processor 122 combines the in-phase and quadrature components of each receiver channel to generate complex received digital signals (e.g., $I_0 + jQ_0$ and $I_1 + jQ_1$) that may be further processed according to conventional beamforming techniques. The two full IQ receiver channels of full IQ phased array receiver 100 consume substantial area of integrated circuit 101 and consume a substantial amount of current in operation.

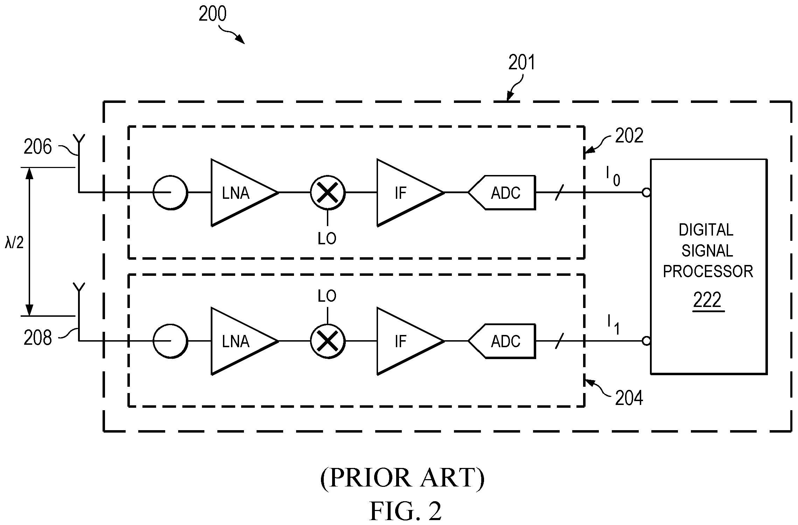

In an alternative phased array receiver topology of a beamforming receiver, rather than generate an in-phase received digital signal and a quadrature digital signal for each receiver channel and antenna, a phased array receiver topology includes $N$ real receiver channels that generate only a real signal for each channel and antenna, i.e., only one phase of a local oscillator clock signal and one antenna are used per channel and antenna. Referring to Fig. 2, real phased array receiver 200 includes two antennas (i.e., $N = 2$) and two real receiver channels in a beamforming receiver. Antenna 206 and antenna 208 are coupled to real receiver channel 202 and real receiver channel 204, respectively. Antenna 206 is spaced by $\lambda / 2$ from antenna 208, consistent with conventional beamforming techniques that estimate a direction of arrival at a phased array of antennas of signals received by real receiver array 200. In an embodiment, real receiver channel 202 and real receiver channel 204 are included in integrated circuit 201. Each real receiver channel $n$ includes a low noise amplifier coupled to a corresponding antenna and a corresponding receiver path that provides real received digital signal $I_n$ to digital signal processor 222.

For example, real receiver channel 202 and real receiver channel 204 each include a low noise amplifier, a frequency mixer to convert the corresponding RF signal to an intermediate frequency signal using a local oscillator signal, intermediate frequency filtering and gain stages, and an analog-to-digital converter to provide an output digital real received signal $I_0$ and output digital real received signal $I_1$, respectively. Digital signal processor 122 combines the real signals provided by each channel to generate a received digital signal (e.g., $I_0 + I_1$) according to conventional beamforming techniques. The real topology substantially reduces the integrated circuit area and substantially reduces the current consumed by the phased array receiver in operation as compared to the full IQ receiver topology. However, the signals generated by a real topology do not distinguish between positive and negative frequencies. As a result, the real topology reduces SIR of a phased array receiver system by approximately 6 dB, thus substantially degrading system performance.

A hybrid phased array receiver in a beamforming receiver system includes $N$ real receiver channels coupled to $N$ corresponding antennas. Each of the $N$ real receiver channels has a phase offset from a corresponding other real receiver channel of the $N$ receiver channels. Digital received signals generated by the $N$ real receiver channels are combined to generate $N / 2$ complex received signals. The hybrid phased array receiver has reduced power consumption in operation and consumes less integrated circuit area than a full IQ phased array receiver topology described above and has improved performance as compared to a real phased array receiver topology described above. Each antenna of hybrid phased array receiver 300 is coupled to a real receiver channel that includes a low noise amplifier, a frequency mixer to convert the RF signal to an intermediate frequency signal, intermediate frequency filtering and gain stages, and an analog-to-digital converter to provide an output digital signal i.e., in-phase received digital signal $I_n$ or quadrature received digital signal $Q_{n+1}$, where $n$ is an antenna index and $0 \leq n \leq N\text{-}1$. Each hybrid receiver channel includes two antennas coupled to corresponding real receiver paths that generate in-phase received digital signal $I_n$ and a quadrature received digital signal $Q_{n+1}$. The corresponding real receiver paths provide a phase shift of 90 degrees between in-phase received digital signal $I_n$ and quadrature received digital signal $Q_{n+1}$.

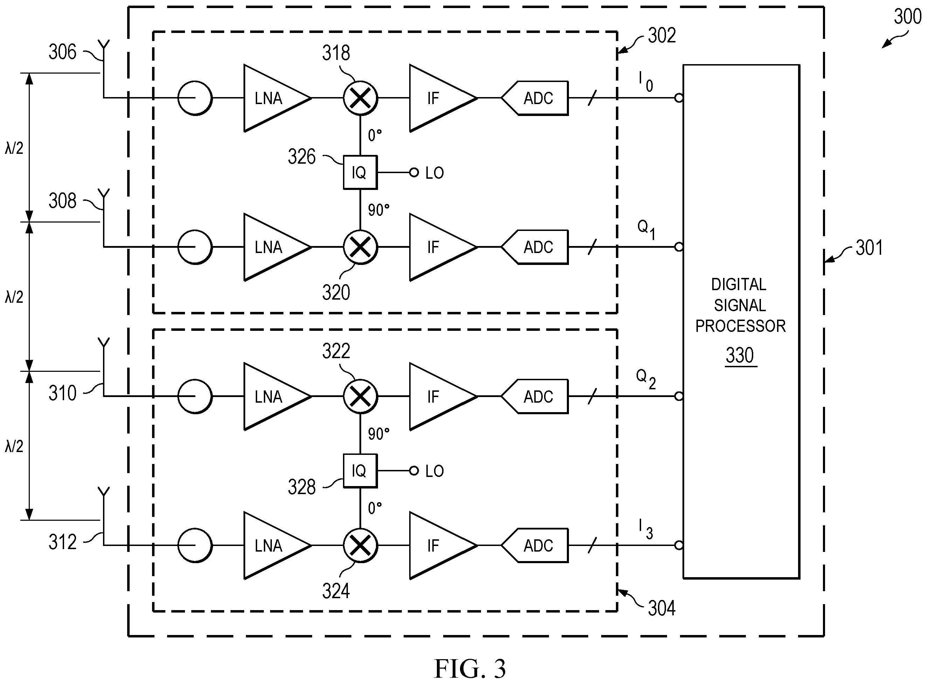

Referring to Fig. 3, hybrid phased array receiver 300 includes two hybrid receiver channels formed from four real receiver channels coupled to four corresponding antennas (i.e., $N = 4$) in a beamforming receiver. Antenna 306 and antenna 308 are coupled to hybrid receiver channel 302. Antenna 310 and antenna 312 are coupled to hybrid receiver channel 304. Antenna 306 is spaced by $\lambda / 2$ from antenna 308, which is spaced by $\lambda / 2$ from antenna 310. Antenna 310 is spaced by $\lambda / 2$ from antenna 312. In an embodiment, hybrid receiver channel 302 and hybrid receiver channel 304 are included in integrated circuit 301.

In an embodiment, hybrid receiver channel 302 includes quadrature clock generator 326, which generates two clock signals that are 90 degrees out of phase with each other based on local oscillator signal LO. Quadrature clock generator 326 provides one of those clock signals (e.g., 0° clock signal) to mixer 318 for use in generating in-phase received signal $I_0$ and the other clock signal (e.g., 90° clock signal) to mixer 320 for use in generating quadrature received digital signal $Q_1$. Similarly, hybrid receiver channel 304 includes quadrature clock generator 328, which generates two clock signals that are 90 degrees out of phase with each other based on local oscillator signal LO. Quadrature clock generator 328 provides one of those clock signals (e.g., 90° clock signal) to mixer 322 for use in generating quadrature received digital signal $Q_3$ and the other clock signal (e.g., 0° clock signal) to mixer 324 for use in generating in-phase received digital signal $I_3$.

Hybrid receiver channel 302 provides in-phase received digital signal $I_0$, which corresponds to the real receiver channel coupled to antenna 306, and quadrature received digital signal $Q_1$, which corresponds to the real receiver channel coupled to antenna 308, to digital signal processor 330. Hybrid receiver channel 304 provides quadrature received digital signal $Q_2$, which corresponds to the real receiver channel coupled to antenna 310, and in-phase received digital signal $I_3$, which corresponds to the real receiver channel coupled to antenna 312, to digital signal processor 330. Digital signal processor 330 combines the in-phase received digital signal and quadrature received digital signal provided by each hybrid channel to generate complex received signals (e.g., $I_0 + jQ_1$ and $I_3 + jQ_2$) that may be further processed according to conventional beamforming techniques. Although two hybrid receiver channels including four real receiver channels and four corresponding antennas are illustrated, other numbers of $N / 2$ hybrid receiver channels corresponding to $N$ real receiver channels and $N$ antennas may be used to generate $N / 2$ received complex digital signals.

In another embodiment of a hybrid phased array receiver, rather than use a quadrature clock generator to generate a phase shift for alternate receiver paths, a phase shift is generated by delaying the received signal between an antenna and a mixer of one real receiver path in a pair of real receiver paths. In at least one embodiment, the delay is implemented using an integrated circuit delay element (e.g., a conductive trace having a length of $\lambda / 4$ for antennas spaced apart by $\lambda / 2$). In at least one embodiment, the delay is implemented using a delay element formed on the printed circuit board (e.g., a conductive trace having a length of $\lambda / 4$ for antennas spaced apart by $\lambda / 2$). In at least one embodiment, the delay is implemented in the antenna (e.g., increased length by $\lambda / 4$ of an antenna in a pair of antennas coupled to a hybrid receiver path).

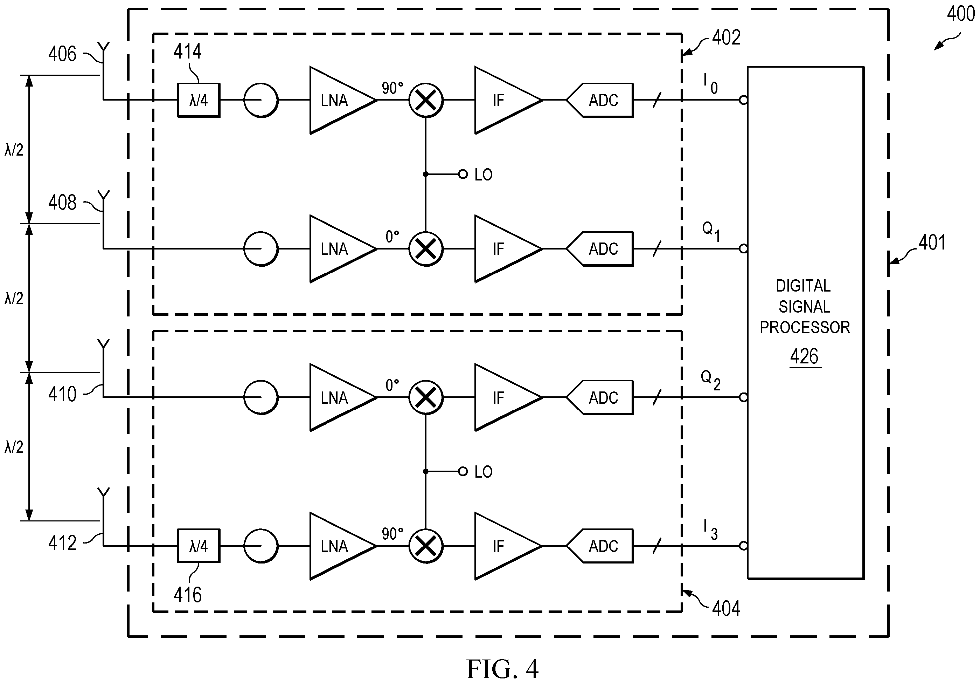

Referring to Fig. 4, hybrid phase array receiver 400 includes four (i.e., $N = 4$) real receiver channels coupled to four corresponding antennas and configured as two (i.e., $N / 2 = 2$) hybrid receiver channels in a beamforming receiver. Antenna 406 and antenna 408 are coupled to corresponding real receiver channels of hybrid receiver channel 402. Antenna 410 and antenna 412 are coupled to corresponding real receiver channels of hybrid receiver channel 404. Antenna 406 is spaced by $\lambda / 2$ from antenna 408, which is spaced by $\lambda / 2$ from antenna 410. Antenna 410 is spaced by $\lambda / 2$ from antenna 412. In an embodiment, hybrid receiver channel 402 and hybrid receiver channel 404 are included in integrated circuit 401. Each antenna is coupled to a real receiver channel that includes a low noise amplifier, a frequency mixer to convert the RF signal to an intermediate frequency signal, intermediate frequency filtering and gain stages, and an analog-to-digital converter to provide in-phase received digital signal $I_n$ or quadrature received digital signal $Q_{n+1}$, where $n$ is the antenna index and $0 \leq n \leq N\text{-}1$.

Each hybrid receiver channel includes two antennas coupled to corresponding real receiver paths that generate an in-phase received signal or a quadrature received signal. The receiver path coupled to antenna 406 and the receiver path coupled to antenna 412 include delay element 414 and delay element 416, respectively. Hybrid receiver channel 402 provides in-phase received digital signal $I_0$ and quadrature received digital signal $Q_1$ to digital signal processor 426 and hybrid receiver channel 404 provides in-phase received digital signal $I_3$ and quadrature received digital signal $Q_2$ to digital signal processor 426. Digital signal processor 426 combines the in-phase and quadrature received digital signals generated by each hybrid receiver channel to generate a corresponding complex received signal (e.g., $I_0 + jQ_1$ and $I_3 + jQ_2$) that may be further processed according to conventional beamforming techniques.

In at least one embodiment of a beamforming communications system, an RF carrier signal has a predetermined frequency of 80 GHz and $\lambda/4$ is approximately 1 mm for antennas spaced apart by $\lambda/2$. In general, implementing the delay using a conductive trace on a printed circuit board is less expensive than implementing the delay on the integrated circuit. A conventional printed circuit board physical design includes centimeters of conductive traces coupled to corresponding antennas. Therefore, including an additional millimeter of conductive material on the printed circuit board to implement a phase delay for the hybrid phased array receiver topology does not substantially affect the cost of the printed circuit board. In contrast, integrated circuit die are typically measured in millimeters, thus an additional millimeter of conductive material consumes a substantial area of the integrated circuit die.

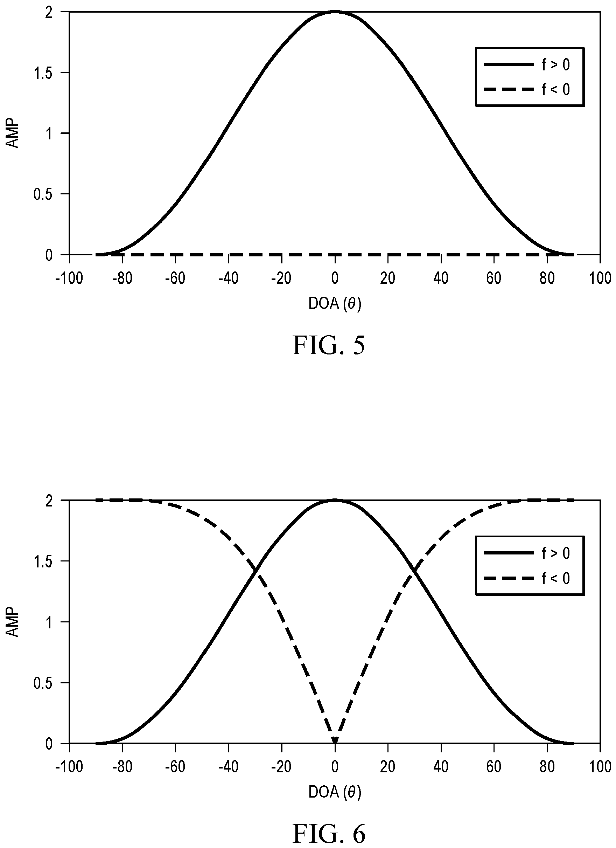

Referring to Figs. 1 and 5, in an embodiment of full IQ phased array receiver 100 that includes two antennas spaced apart by $\lambda/2$, the gain (AMP) is the sum of the amplitude of the signal received by the first antenna (i.e., A1) and the amplitude of the signal received by the second antenna (i.e., A2):

$$A1 = e^{j\phi_{IF}} \times 1;$$

and

$$A2 = e^{j\phi_{IF}+\phi_A} \times 1,$$

where $\phi_A = \pi \sin(\theta)$ is the phase related to the angle of arrival and $\phi_{IF} = 2\pi ft$ is the beat frequency phase. Therefore, the gain of full IQ phased array receiver 100 is as follows:

$$AMP = A1 + A2$$

$$= (1 + e^{j\phi_A})e^{j\phi_{IF}} \: for \: f > 0; \: and$$

$$= 0 \: for \: f < 0.$$

Referring to Figs. 3 and 6, an embodiment of a hybrid phased array receiver that includes two antennas spaced apart by $\lambda/2$ (e.g., hybrid receiver channel 302) has a gain as follows:

$$A1 = \cos[\phi_{IF}] \times 2;$$

$$A2 = \sin[\phi_A + \phi_{IF}] \times 2j;$$

and

$$AMP = A1 + A2$$

$$= (1 + e^{j\phi_A})e^{j\phi_{IF}} \: for \: f > 0; \: and$$

$$= (1 - e^{j\phi_A})e^{-j\phi_{IF}} \: for \: f < 0.$$

Beamforming is a consequence of combining the in-phase received digital signal I and the quadrature received digital signal Q. The suppression of negative frequencies has a dependency on the direction of arrival of the received signal at the antenna array. The gain in the positive frequency sideband of a hybrid phased array receiver having N antennas is identical to the gain of a full IQ phased array receiver having N antennas. The amplitude of the positive frequency sideband of the received signal peaks when the direction of arrival is zero degrees (i.e., $\theta = 0$). However, the gain of the hybrid phased array receiver in the negative frequency sideband differs from that of the full IQ phased array receiver. In the negative frequency sideband, the hybrid phased array receiver completely suppresses negative frequencies of a received signal for a direction of arrival of zero degrees. However, as the absolute value of the direction of arrival of the received signal increases from zero, the suppression of negative frequencies decreases. In general, the beamforming of the hybrid phased array receiver is beneficial for a small direction of arrival of the interfering signal, e.g., |DOA| < 30 degrees for $\lambda/2$ antenna spacing.

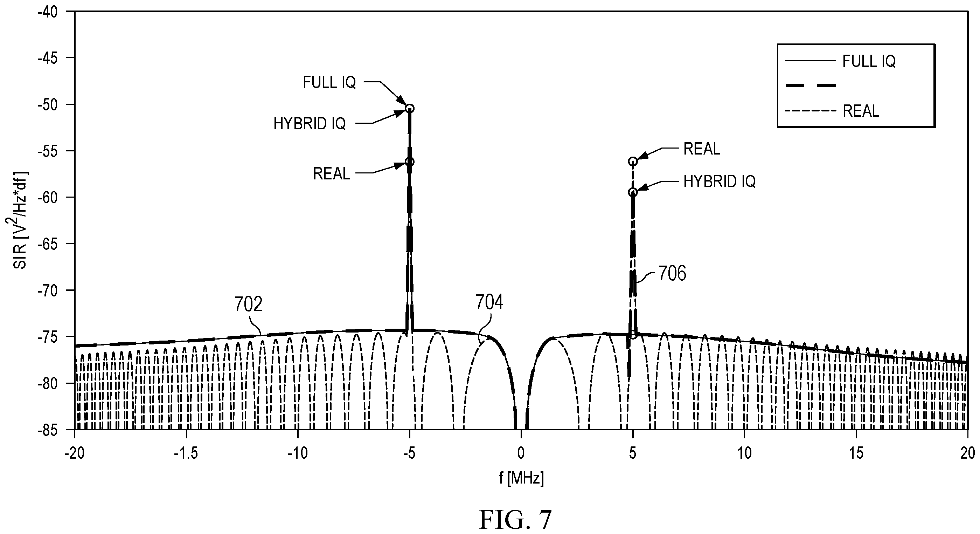

In a typical radar application (e.g., frequency modulated continuous wave radar), interferers tend to appear as wideband, baseband chirps. Such interferers contribute to the noise floor of the received signal. Figure 7 illustrates a portion of the frequency response of a two-antenna full IQ phased array receiver (waveform 702), the response of a two-antenna real phased array receiver (waveform 704), and the response of a two-antenna hybrid phased array receiver (waveform 706) to a wideband, baseband chirp interferer. The SIR is normalized to values for a single antenna, the direction of arrival of the target signal is 15 degrees, and the direction of arrival of the interferer is zero degrees. The real receiver signal spectrum is comb-like. A quadrature signal component would also have a comb-like spectrum but with peaks and nulls that are swapped as compared to the in-phase component (i.e., the quadrature signal component would have a frequency orthogonal ripple as compared to the in-phase signal component). Therefore, the full-IQ interferer (see waveform 702) has a flat spectrum that is the sum of the in-phase received digital signal spectrum (see waveform 704) and the quadrature received digital signal spectrum. The in-phase received digital signal spectrum and the quadrature received digital signal spectrum each have a comb-like spectrum that cause complex signal I + jQ to have the same spectral peak envelope (e.g., -74.8 dBV$^2$/Hz) as the individual -phase received digital signal spectrum and quadrature received digital signal spectrum.

The SIR of the two-antenna hybrid phased array receiver and two-antenna, full IQ phased array receiver at a beat signal frequency (e.g., -5 MHz) is approximately 50.4 dB and is attenuated by approximately 6 dB in the two-antenna, real phased array receiver. The two-antenna full IQ phased array receiver fully suppresses the sideband signal image at 5 MHz. The two-antenna real phased array receiver attenuates the image at 5 MHz by 6 dB and the two-antenna hybrid beamformer system further suppresses the image, e.g., by another 3 dB. The beamforming signal response of the two-antenna full IQ phased array receiver response (i.e., $I_0 + jQ_0 + I_1 + jQ_1$) and the two-antenna hybrid beamformer (i.e., $I_0 + jQ_1$) is approximately 6 dB higher than the response of the two-antenna real phased array receiver response (i.e., $I_0 + I_1$). In addition, the peak envelope of the interferer is the same for those four configurations for an interferer at approximately zero degrees direction of arrival. Therefore, both the two-antenna full IQ phased array receiver and the two-antenna hybrid phased array receiver configurations benefit from a maximum of 6 dB SIR advantage.

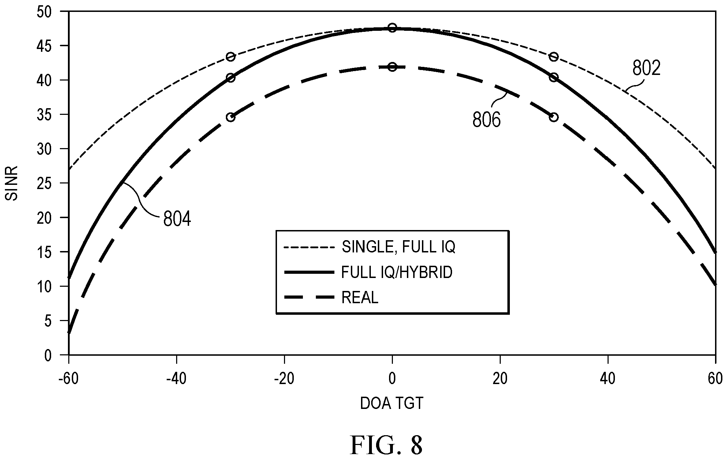

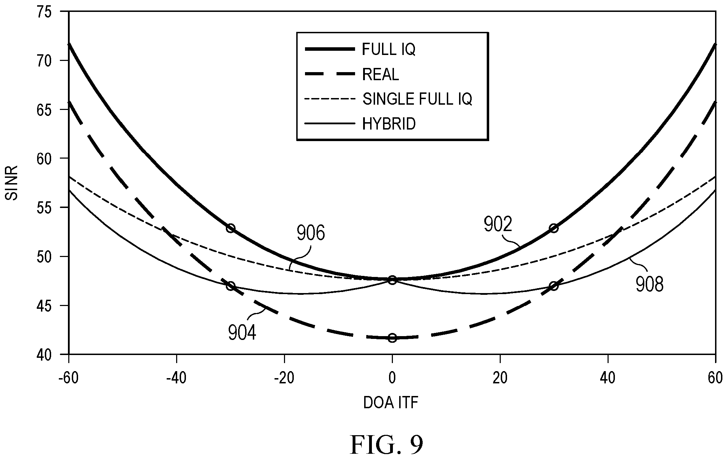

Figures 8 and 9 illustrate the SINR as a function of direction of arrival of the target signal (Fig. 8 with an interferer at zero degrees and a sweep of the target signal over the direction of arrival) and the SINR as a function of direction of arrival of interferer (Fig. 9 with the target signal fixed at zero degrees and a sweep of the interferer over the direction of arrival) for a two-antenna full IQ phased array receiver, a two-antenna real phased array receiver, a two-antenna hybrid phased array receiver, and a single antenna full IQ receiver channel using antenna elements with a half-power beamwidth of +/-35°. Assuming that thermal noise is constant, the SINR is defined by the power received from one or more antenna. Beamforming causes coherent combination that focuses energy around zero degrees of waveform 806, which corresponds to a two-antenna real phased array receiver and waveform 804, which corresponds to the two-antenna full IQ phased array receiver or the two-antenna hybrid phased array receiver, as compared to waveform 802, which corresponds to a single antenna full IQ receiver channel.

When sweeping the target signal direction of arrival, phased array receiver configurations have an array factor power loss as compared to the single antenna full IQ receiver configuration. The two-antenna hybrid phased array receiver configuration and the two-antenna full IQ phased array receiver configuration have 6 dB greater SIR than the two-antenna real phased array receiver configuration. When sweeping the interferer direction of arrival, the two-antenna full IQ phased array receiver configuration (waveform 902) maintains the 6 dB SIR advantage over the two-antenna real phased array receiver configuration (waveform 904), whereas the two-antenna hybrid phased array receiver configuration (waveform 908) is a compromise between the two-antenna real phased array receiver configuration (waveform 904) and the single antenna full IQ phased array receiver configuration (waveform 906) for a direction of arrival of the interferer having an absolute value of the less than thirty degrees (i.e., |DOA| < 30°). Beyond thirty degrees of the absolute value of the direction of arrival of the interferer (i.e., |DOA| > 30°), the two-antenna hybrid phased array receiver configuration has less performance improvement as compared to the two-antenna real phased array receiver configuration. The relationship described with reference to Figs. 7, 8, and 9 are specific for antennas spaced apart by $\lambda/2$, where interelement phase delay

$$\phi_A = \pi \sin(\theta) \times \frac{2d}{\lambda}$$

. At a direction of arrival $\theta = 30°$, orthogonality between in-phase received digital signal $I_0$ and quadrature received digital signal $Q_1$ of the two-antenna hybrid phased array receiver is completely lost.

In an embodiment, a method for receiving a radio frequency signal using a phased array receiver includes generating a first digital received signal based on a first signal received from a first antenna and a local clock signal. The method includes generating a second digital received signal based on a second signal received from a second antenna and the local clock signal. The method includes combining the first digital received signal and the second digital received signal to generate a first complex received signal. The second antenna is spaced by a predetermined distance from the first antenna.

In an embodiment of the method, the first antenna and the second antenna are configured for a small direction of arrival of a received signal.

In an embodiment of the method, the predetermined distance is $\lambda / 2$, where $\lambda = c/f$, $c$ is the speed of light, $f$ is a predetermined frequency of a carrier signal.

In an embodiment, the method further includes delaying the first signal received from the first antenna to generate a delayed signal. The delayed signal is ninety degrees out of phase from the first signal received from the first antenna. The first digital received signal is generated using the delayed signal.

In an embodiment, the method further includes generating a first clock signal based on the local clock signal. In an embodiment, the method further includes generating a second clock signal based on the local clock signal. In an embodiment of the method, the second clock signal is ninety degrees out of phase from the first clock signal. In an embodiment of the method, generating the first digital received signal uses the first clock signal, and generating the second digital received signal uses the second clock signal.

In an embodiment, the method further includes generating a third digital received signal based on a third signal received from a third antenna and the local clock signal. In an embodiment, the method further includes generating a fourth digital received signal based on a fourth signal received from a fourth antenna and the local clock signal. In an embodiment, the method further includes combining the third digital received signal and the fourth digital received signal to generate a second complex received signal. In an embodiment, the third antenna is spaced by the predetermined distance from the second antenna, and the fourth antenna is spaced by the predetermined distance from the third antenna.

In an embodiment, the method further includes delaying the first signal received from the first antenna to generate a delayed signal. The delayed signal is ninety degrees out of phase from the first signal received from the first antenna. In an embodiment, the method further includes delaying the fourth signal received from the fourth antenna to generate a second delayed signal. The second delayed signal is ninety degrees out of phase from the fourth signal received from the fourth antenna. In an embodiment, the first digital received signal is generated using the delayed signal and the local clock signal, and the fourth digital received signal is generated using the second delayed signal and the local clock signal.

In an embodiment, the method further includes generating a first clock signal based on the local clock signal. In an embodiment, the method further includes generating a second clock signal based on the local clock signal. In an embodiment, the method further includes generating a third clock signal based on the local clock signal and generating a fourth clock signal based on the local clock signal. In an embodiment, the second clock signal and the third clock signal are ninety degrees out of phase from the first clock signal and the fourth clock signal.

In an embodiment of the method, the first antenna, the second antenna, the third antenna, and the fourth antenna are configured for a small direction of arrival of a received signal. In an embodiment, the predetermined distance is $\lambda / 2$, where $\lambda = c / f$, c is the speed of light, $f$ is a predetermined frequency of a carrier signal.

In an embodiment, a phased array receiver includes a first receiver path configured to generate a first digital received signal based on a first signal received from a first antenna and a local clock signal. The phased array receiver includes a second receiver path configured to generate a second digital received signal based on a second signal received from a second antenna and the local clock signal. The phased array receiver includes a circuit configured to combine the first digital received signal and the second digital received signal to generate a first complex received signal. The second antenna is spaced by a predetermined distance from the first antenna.

In an embodiment, the phased array receiver further includes the first antenna, and the second antenna. In an embodiment of the phased array receiver, the first antenna and the second antenna are configured for a small direction of arrival of a received signal.

In an embodiment of the phased array receiver, the predetermined distance is $\lambda / 2$, where $\lambda = c / f$, c is the speed of light, $f$ is a predetermined frequency of a carrier signal.

In an embodiment of the phased array receiver, the first receiver path comprises a delay element coupled between the first antenna and the circuit.

In an embodiment of the phased array receiver, the predetermined distance is $\lambda / 2$, where $\lambda = c / f$, c is the speed of light, $f$ is a predetermined frequency of a carrier signal, and the delay element is a conductive trace on a printed circuit board having a length of $\lambda / 4$.

In an embodiment, the phased array receiver further includes a second circuit configured to provide a first clock signal based on the local clock signal and configured to provide a second clock signal based on the local clock signal. The second clock signal is ninety degrees out of phase from the first clock signal. In an embodiment of the phased array receiver, the first receiver path comprises a first mixer circuit responsive to the first clock signal and the second receiver path includes a second mixer circuit responsive to the second clock signal.

In an embodiment, the phased array receiver further includes a third receiver path configured to generate a third digital received signal based on a third signal received from a third antenna and the local clock signal. In an embodiment, the phased array receiver further includes a fourth receiver path configured to generate a fourth digital received signal based on a fourth signal received from a fourth antenna and the local clock signal. In an embodiment of the phased array receiver, the circuit is further configured to combine the third digital received signal and the fourth digital received signal to generate a second complex received signal. In an embodiment of the phased array receiver, the third antenna is spaced by the predetermined distance from the second antenna and the fourth antenna is spaced by the predetermined distance from the third antenna.

In an embodiment of the phased array receiver, the first receiver path includes a delay element coupled between the first antenna and the circuit. In an embodiment of the phased array receiver, the fourth receiver path includes a second delay element coupled between the fourth antenna and the circuit.

In an embodiment, the phased array receiver further includes a second circuit configured to provide a first clock signal based on the local clock signal and configured to provide a second clock signal based on the local clock signal. The second clock signal is ninety degrees out of phase from the first clock signal. In an embodiment, the phased array receiver further includes a third circuit configured to provide a third clock signal based on the local clock signal and configured to provide a fourth clock signal based on the local clock signal. The fourth clock signal is ninety degrees out of phase from the third clock signal. In an embodiment of the phased array receiver, the first receiver path comprises a first mixer circuit responsive to the first clock signal, the second receiver path comprises a second mixer circuit responsive to the second clock signal, the third receiver path comprises a third mixer circuit responsive to the third clock signal, and the fourth receiver path comprises a fourth mixer circuit responsive to the fourth clock signal.

In an embodiment, the phased array receiver further includes the first antenna, the second antenna, the third antenna, and the fourth antenna. In an embodiment of the phased array receiver, the first antenna and the second antenna are configured for a small direction of arrival of a received signal. In an embodiment of the phased array receiver, the predetermined distance is $\lambda / 2$, where $\lambda = c\ /f,$ c is the speed of light, and $f$ is a predetermined frequency of a carrier signal.

Thus, a hybrid beamforming technique reduces the cost of a phased array receiver. The hybrid phased array receiver topology has improved performance as compared to a real phased array receiver for a small direction of arrival of an interferer and has the same performance as a full IQ phased array receiver for a zero degree direction of arrival of the interferer.

Although the invention is described herein with reference to specific embodiments, various modifications and changes can be made without departing from the scope of the present invention as set forth in the claims below. For example, although the embodiments are described as including a carrier signal that has a predetermined frequency of 80 GHz and $\lambda / 4$ is approximately 1 mm, in other embodiments, other predetermined frequencies and other delays are used. In addition, although the embodiments are described as including an array of antennas spaced apart by $\lambda / 2$, where $\lambda$ is the wavelength of the carrier signal, in other embodiments, the antennas are spaced apart by different ratios of the wavelength of a carrier signal. Further, although the embodiments are described in a radar application, techniques described above are applicable to other beamforming applications. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Unless stated otherwise, terms such as "first" and "second" are used to arbitrarily distinguish between the elements such terms describe. Thus, these terms are not necessarily intended to indicate temporal or other prioritization of such elements.

**Claims**

1. A phased array receiver comprising:

a first receiver path configured to generate a first digital received signal based on a first signal received from a first antenna and a local clock signal;
a second receiver path configured to generate a second digital received signal based on a second signal received from a second antenna and the local clock signal; and
a circuit configured to combine the first digital received signal and the second digital received signal to generate a first complex received signal,
wherein the second antenna is spaced by a predetermined distance from the first antenna.

2. The phased array receiver as recited in claim 1, further comprising:

the first antenna; and
the second antenna,
wherein the first antenna and the second antenna are configured for a small direction of arrival of a received signal.

3. The phased array receiver as recited in claim 2, wherein the predetermined distance is $\lambda / 2$, where $\lambda = c / f$, c is the speed of light, and $f$ is a predetermined frequency of a carrier signal.

4. The phased array receiver as recited in any preceding claim, wherein the first receiver path comprises a delay element coupled between the first antenna and the circuit.

5. The phased array receiver as recited in claim 4,

wherein the predetermined distance is $\lambda / 2$, where $\lambda = c / f$, c is the speed of light, and $f$ is a predetermined frequency of a carrier signal, and
wherein the delay element is a conductive trace on a printed circuit board having a length of $\lambda / 4$.

6. The phased array receiver as recited in any preceding claim, further comprising:

a second circuit configured to provide a first clock signal based on the local clock signal and configured to provide a second clock signal based on the local clock signal, the second clock signal being ninety degrees out of phase from the first clock signal,
wherein the first receiver path comprises a first mixer circuit responsive to the first clock signal, and
wherein the second receiver path comprises a second mixer circuit responsive to the second clock signal.

7. The phased array receiver as recited in any preceding claim, further comprising:

a third receiver path configured to generate a third digital received signal based on a third signal received from a third antenna and the local clock signal; and

a fourth receiver path configured to generate a fourth digital received signal based on a fourth signal received from a fourth antenna and the local clock signal,

wherein the circuit is further configured to combine the third digital received signal and the fourth digital received signal to generate a second complex received signal,

wherein the third antenna is spaced by the predetermined distance from the second antenna and the fourth antenna is spaced by the predetermined distance from the third antenna.

8. The phased array receiver as recited in claim 7,

wherein the first receiver path comprises a delay element coupled between the first antenna and the circuit, and

wherein the fourth receiver path comprises a second delay element coupled between the fourth antenna and the circuit.

9. The phased array receiver as recited in claim 7 or 8, further comprising:

a second circuit configured to provide a first clock signal based on the local clock signal and configured to provide a second clock signal based on the local clock signal, the second clock signal being ninety degrees out of phase from the first clock signal; and

a third circuit configured to provide a third clock signal based on the local clock signal and configured to provide a fourth clock signal based on the local clock signal, the fourth clock signal being ninety degrees out of phase from the third clock signal,

wherein the first receiver path comprises a first mixer circuit responsive to the first clock signal,

wherein the second receiver path comprises a second mixer circuit responsive to the second clock signal,

wherein the third receiver path comprises a third mixer circuit responsive to the third clock signal, and

wherein the fourth receiver path comprises a fourth mixer circuit responsive to the fourth clock signal.

10. The phased array receiver as recited in any of claims 7 to 9, further comprising:

the first antenna;
the second antenna,
the third antenna; and

the fourth antenna,

wherein the first antenna and the second antenna are configured for a small direction of arrival of a received signal, and

wherein the predetermined distance is $\lambda / 2$, where $\lambda = c / f$, c is the speed of light, and $f$ is a predetermined frequency of a carrier signal.

11. A method for receiving a radio frequency signal using a phased array receiver, the method comprising:

generating a first digital received signal based on a first signal received from a first antenna and a local clock signal;

generating a second digital received signal based on a second signal received from a second antenna and the local clock signal; and

combining the first digital received signal and the second digital received signal to generate a first complex received signal,

wherein the second antenna is spaced by a predetermined distance from the first antenna.

12. The method as recited in claim 11, wherein the first antenna and the second antenna are configured for a small direction of arrival of a received signal.

13. The method as recited in claim 11 or 12, wherein the predetermined distance is $\lambda / 2$, where $\lambda = c / f$, c is the speed of light, and $f$ is a predetermined frequency of a carrier signal.

14. The method as recited in any of claims 11 to 13, further comprising:

delaying the first signal received from the first antenna to generate a delayed signal, the delayed signal being ninety degrees out of phase from the first signal received from the first antenna,

wherein the first digital received signal is generated using the delayed signal.

15. The method as recited in any of claims 11 to 14, further comprising:

generating a first clock signal based on the local clock signal,

generating a second clock signal based on the local clock signal, the second clock signal being ninety degrees out of phase from the first clock signal,

wherein generating the first digital received signal uses the first clock signal, and

wherein generating the second digital received signal uses the second clock signal.

FIG. 1

(PRIOR ART)

(PRIOR ART)
FIG. 2

FIG. 3

EP 4 564 043 A1

FIG. 4

EP 4 564 043 A1

FIG. 5

FIG. 6

FIG. 7

EP 4 564 043 A1

FIG. 8

FIG. 9

EP 4 564 043 A1

Europäisches
Patentamt

European
Patent Office

Office européen
des brevets

# EUROPEAN SEARCH REPORT

**Application Number**

EP 24 21 6217

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/363520 A1 (MAYER MARCEL [DE] ET AL) 19 November 2020 (2020-11-19) <br> * paragraph [0026] - paragraph [0028] * <br> * paragraph [0043] * <br> * paragraph [0047] * <br> * figures 1-6 * | 1-15 | INV. <br> G01S7/02 <br> G01S7/288 <br> G01S7/35 <br> G01S13/02 <br> G01S13/44 <br> H01Q21/22 |
| A | US 2023/184889 A1 (FIORE VINCENZO [AT]) 15 June 2023 (2023-06-15) <br> * paragraph [0057] - paragraph [0075] * <br> * figures 1-8 * | 1-15 | |
| A | SALMON NEIL A ET AL: "Minimising the costs of next generation aperture synthesis passive millimetre wave imagers", <br> MILLIMETRE WAVE AND TERAHERTZ SENSORS AND TECHNOLOGY IV, SPIE, 1000 20TH ST. BELLINGHAM WA 98225-6705 USA, <br> vol. 8188, no. 1, <br> 6 October 2011 (2011-10-06), pages 1-6, <br> XP060020492, <br> DOI: 10.1117/12.899309 <br> [retrieved on 1901-01-01] <br> * abstract * <br> * figures 1-2 * | 1-15 | **TECHNICAL FIELDS SEARCHED (IPC)** <br> G01S <br> H01Q |

The present search report has been drawn up for all claims

| Place of search | Date of completion of the search | Examiner |
|---|---|---|
| Munich | 20 March 2025 | Köppe, Maro |

EPO FORM 1503 03.82 (P04C01)

## ANNEX TO THE EUROPEAN SEARCH REPORT
## ON EUROPEAN PATENT APPLICATION NO.

EP 24 21 6217

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | | Publication date | Patent family member(s) | | Publication date |
|---|---|---|---|---|---|
| US 2020363520 | A1 | 19-11-2020 | CN 111630410 A | | 04-09-2020 |
| | | | DE 102018200765 A1 | | 18-07-2019 |
| | | | EP 3740782 A1 | | 25-11-2020 |
| | | | JP 7033663 B2 | | 10-03-2022 |
| | | | JP 2021510822 A | | 30-04-2021 |
| | | | KR 20200104913 A | | 04-09-2020 |
| | | | US 2020363520 A1 | | 19-11-2020 |
| | | | WO 2019141413 A1 | | 25-07-2019 |
| US 2023184889 | A1 | 15-06-2023 | NONE | | |

EPO FORM P0459

For more details about this annex : see Official Journal of the European Patent Office, No. 12/82